# EUROPÄISCHE PATENTSCHRIFT

(11) **EP 1 491 987 B1**
(45) Veröffentlichungstag und Bekanntmachung des Hinweises auf die Patenterteilung: **23.09.2015**
(21) Anmeldenummer: 04009744.6
(22) Anmeldetag: 23.04.2004
(51) Int. Cl.: G06F 1/20

(54) **Kühlung eines Computerbauteils**
Cooling of a computer component
Refroidissement d'un composant d'ordinateur

(30) Priorität: 27.06.2003 DE 20309965 U
(43) Veröffentlichungstag der Anmeldung: 29.12.2004
(73) Patentinhaber: Fujitsu Technology Solutions Intellectual Property GmbH, 80807 München (DE)
(72) Erfinder: Kannler, Bernhard, 86199 Augsburg (DE); Schmid, Michael, 89407 Dillingen (DE)
(74) Vertreter: Epping - Hermann - Fischer

(56) Entgegenhaltungen:
- EP-A- 1 085 795
- WO-A-99/47994
- US-A- 5 959 837
- US-B1- 6 407 916
- US-B1- 6 445 580
- US-B1- 6 549 414

## Beschreibung

Die Erfindung betrifft eine Vorrichtung zur Kühlung eines hitzeentwickelnden Bauteils im Gehäuse eines Computers, wobei ein erster Kühlkörper auf dem hitzeentwickelnden Bauteil angeordnet ist und ein zweiter Kühlkörper mit dem ersten Kühlkörper über mindestens ein Wärmerohr verbunden ist.

Eine derartige Vorrichtung zur Kühlung ist aus der US 5,959,837 bekannt.

Aus der US 6,407,916 B1 und der US 6,333,850 B1 ist ebenfalls die Verwendung eines Wärmerohres und einem am Wärmerohr angeordneter zusätzlicher Kühlkörper zur Verbesserung der Kühlung in einem Computersystem bekannt.

Die durch den Betrieb von Computern, an Computerbauteilen entstehende Abwärmeleistung nimmt durch die gesteigerte Rechenleistung der Computerbauteile insbesondere der CPUs stark zu. Wird diese Abwärme nicht zuverlässig von dem hitzeentwickelnden Computerbauteil abgeführt, so droht eine thermische Überbelastung des Computerbauteils, deren Folge schließlich eine Zerstörung des Computerbauteils ist.

Zur Erhaltung der Funktion und Betriebssicherheit des Computerbauteils ist deshalb die Ableitung der Abwärme von immenser Bedeutung. Es sind dazu verschiedene Systeme und Anordnungen bekannt, die allesamt zum allgemein bekannten Stand der Technik zählen. Dies sind in einer beispielhaften Aufzählung:
1. Große Kühlkörper in direkter Verbindung mit dem hitzeentwickelnden Bauteil, sowie Lüfter die eine Umströmung von Luft um das hitzeentwickelnde Bauteil und den damit verbundenen Kühlkörper bewirken.
2. Peltier-Kühlungen.
3. Kühlkreisläufe mit zum Beispiel Wasser als Medium.
4. Lüfterkaskaden, die für ausreichend kühle Frischluft im Gehäuse eines Computers sorgen.

Um bei diesen Systemen der ständig steigenden Abwärme gerecht zu werden, müssen die Dimensionierungen dieser Systeme dem Abwärmebedarf angepaßt werden. Dies führt zu mehr Lüftern oder größeren Kühlkörpern. Die Folge ist eine höhere Geräuschentwicklung und/oder ein geringeres Platzangebot an verfügbaren Raum im Gehäuse eines Computers durch größer gewordene Kühlkörper.

Es ist die Aufgabe der Erfindung, dem gestiegenen Bedarf an Kühlung gerecht zu werden, ohne dabei zusätzliche Geräuschentwicklung zu verursachen.

Diese Aufgabe wird durch die Vorrichtung gemäß Anspruch 1 gelöst.

Dabei wird vorteilhaft die geringere Temperatur der Außenluft genutzt. Die thermische Energie des hitzeentwickelnden Bauteils wird von diesem über den ersten Kühlkörper abgeführt und teilweise an die Innenluft im Gehäuse abgegeben. Es steigt dadurch die Temperatur im Gehäuse an. Mit steigender Temperatur im Gehäuse nimmt die Menge an abführbarer Wärmeenergie über die Gehäuse-Innenluft ab. Erfindungsgemäß ist mit dem ersten Kühlkörper ein Wärmerohr verbunden, das eine energetische Verbindung mit einem zweiten Kühlkörper herstellt. In diesem Wärmerohr befindet sich ein Medium, das an der Verbindungsstelle zum ersten Kühlkörper verdampft und an der Verbindungsstelle zum zweiten Kühlkörper kondensiert. Beim Verdampfungsprozess nimmt das Medium Wärme auf, der Dampf steigt innerhalb des Wärmerohres zum zweiten Kühlkörper und gibt dort durch einen Kondensationsprozeß die Wärme an diesen Kühlkörper ab. Dieser Prozeß findet in vorbestimmten Temperaturbereichen an den beiden Kühlkörpern statt und ist geräuschlos und verschleißfrei. Das kondensierte Medium fließt innerhalb des Wärmerohres zurück zur Kontaktstelle mit dem ersten Kühlkörper. Es wird somit der zweite Kühlkörper zur Energieabgabe von Abwärmeenergie an die das Gehäuse umgebende Außenluft genutzt.

Erfindungsgemäß ist der zweite Kühlkörper in einem gehäuseinternen Kühlluftschacht angeordnet, der mit Außenluft durchströmt wird. In einer vorteilhaften Ausführungsform hat dieser Kühlluftschacht keine Verbindung mit der Innenluft des Gehäuses die durch die hitzeentwickelnden Bauteile erwärmt wird, so daß sichergestellt ist, daß der zweite Kühlkörper ausschließlich von der kühleren Außenluft umströmt wird. Vorteilhaft an dieser Ausführungsform ist, daß der zweite Kühlkörper ebenso wie alle anderen Komponenten des Computers durch das Gehäuse geschützt ist. Ebenso ist damit ein optimierter Arbeitspunkt für das Wärmerohr einstellbar.

Um die Kühlleistung vorteilhaft zu verbessern, ist in diesem Kühlluftschacht ein Ventilator installiert. Dabei ist dieser Ventilator in einer weiteren Ausführungsform so regelbar, daß seine Drehzahl und die damit einhergehende Geräuschentwicklung abhängig von der erforderlichen Kühlleistung gesteuert wird.

In einer vorteilhaften Ausführungsform ist die Strömung der Gehäuse-Innenluft durch einen weiteren Ventilator angeregt. Der Ventilator ist hierzu unmittelbar auf den ersten Kühlkörper montiert oder es wird zur Anregung der Strömung der Gehäuse-Innenluft ein Ventilator im Stromversorgungsmodul verwendet.

Im folgenden ist die Erfindung anhand der Figuren näher erläutert.

Es zeigt:
Figur 1 einen ersten Kühlkörper 1 und einen zweiten Kühlkörper 2, die verbunden sind mit einem Wärmerohr 3 und in einem Gehäuse 7 angeordnet sind gemäß einer nicht beanspruchten Kühlvorrichtung, und
Figur 2 die Anordnung aus Figur 1 mit einem Lüfter, und
Figur 3 eine Ausführungsform der Erfindung, und
Figur 4 eine weitere nicht beanspruchte Kühlvorrichtung.

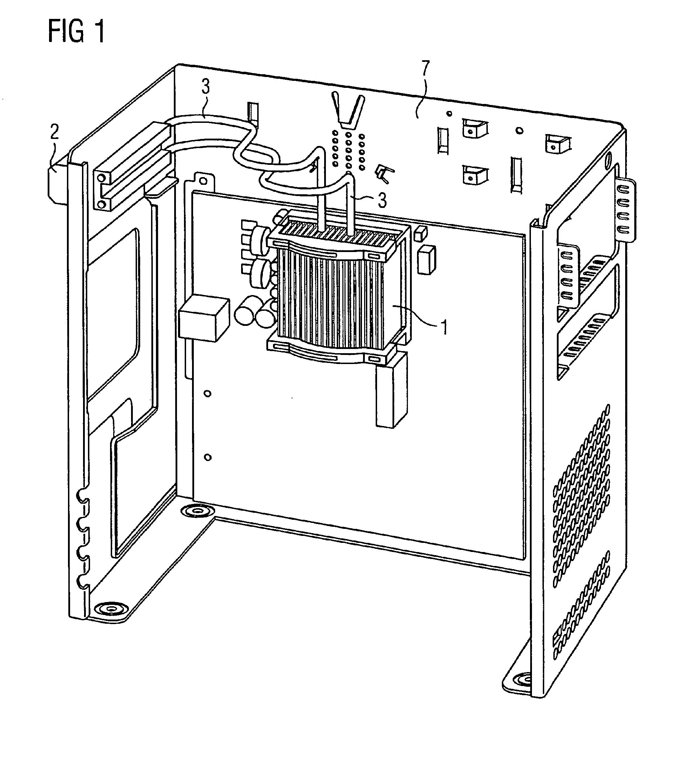

Figur 1 stellt einen ersten Kühlkörper 1 und einen zweiten Kühlkörper 2, die verbunden sind mit einem Wärmerohr 3 und in einem Gehäuse 7 eines Computers angeordnet sind, dar. Das Wärmerohr 3 ist an seinem einen Ende mit dem Kühlkörper 1 verbunden und an seinem zweiten Ende mit dem Kühlkörper 2 verbunden. Die Verwendung von zwei Wärmerohren, wie in der Figur 1 dargestellt, stellt keine Vor- und Rücklaufleitung dar, sondern zwei in sich geschlossene Wärmerohre, die durch einen Verdampfungsprozess des innerhalb der Wärmerohre befindlichen Mediums, Wärmeenergie an der Stelle des Kühlkörpers 1 aufnehmen, wobei das Medium in Gasform zum Kühlkörper 2 aufsteigt, dort kondensiert und als Kondensat zum Kühlkörper 1 zurückfließt. Dieser Kreislauf findet innerhalb eines jeden der beiden dargestellten Rohre statt. Die Verwendung von zwei Rohren ist vorteilhaft gegenüber der Verwendung von einem Rohr, da damit eine höhere Wärmeleistung in gleichmäßiger Verteilung abgeführt werden kann. Der Kühlkörper 2 wird, bedingt durch die Anordnung ausserhalb des Gehäuses 7 von Luft umströmt, deren Temperatur geringer ist, als die Luft innerhalb des Gehäuses 7.

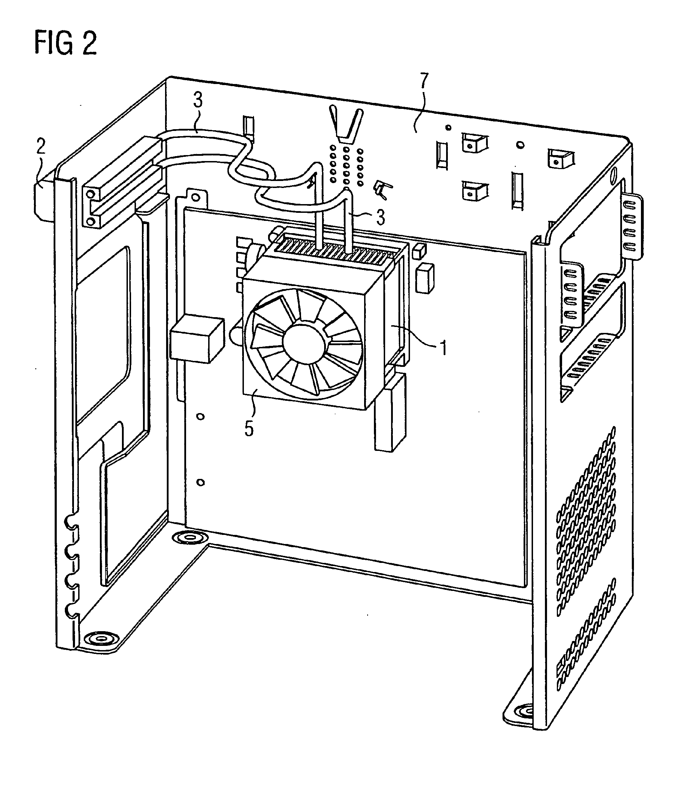

Figur 2 zeigt die Verwendung der Kühlvorrichtung in einem Gehäuse 7, wobei der Kühlkörper 1 auf eine CPU montiert ist und zusätzlich mit einem ersten Lüfter 5 versehen ist. Dieser Lüfter 5 regt die Strömung der Kühlluft innerhalb des Gehäuses 7 insbesondere um die Kühllamellen des ersten Kühlkörpers an. Der zweite Kühlkörper 2 befindet sich räumlich oberhalb des ersten Kühlkörpers, so daß die Funktion des Wärmerohres 3 gegeben ist.

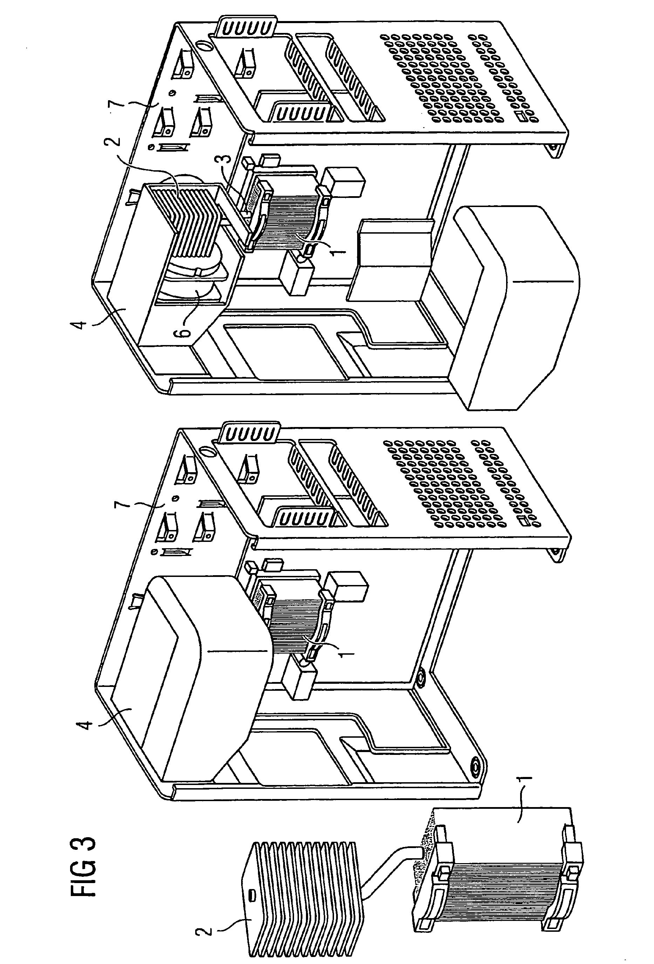

Eine Ausführungsform der Erfindung ist in Figur 3 dargestellt, in der ein Kühlluftschacht 4 innerhalb des Gehäuses 7 angeordnet ist, indessen wiederum sich der Kühlkörper 2 befindet. Durch den Kühlluftschacht ist gewährleistet, daß der Kühlkörper 2 trotz seiner Lage innerhalb des Gehäuses 7 ausschließlich von kühlerer Außenluft umströmt wird. Hier befindet sich der erste Kühlkörper 1 auf der CPU und der zweite Kühlkörper 2 räumlich überhalb des ersten Kühlkörpers 1. In diesem Ausführungsbeispiel ist ein Wärmerohr 3 zur Übertragung der Wärmeenergie von dem ersten Kühlkörper 1 und zweiten Kühlkörper 2 vorgesehen. Zur besseren Kühlung des Kühlkörpers 2 ist ein zweiter Ventilator 6 in den Kühlluftschacht angeordnet, so daß die Kühlleistung erhöhbar ist.

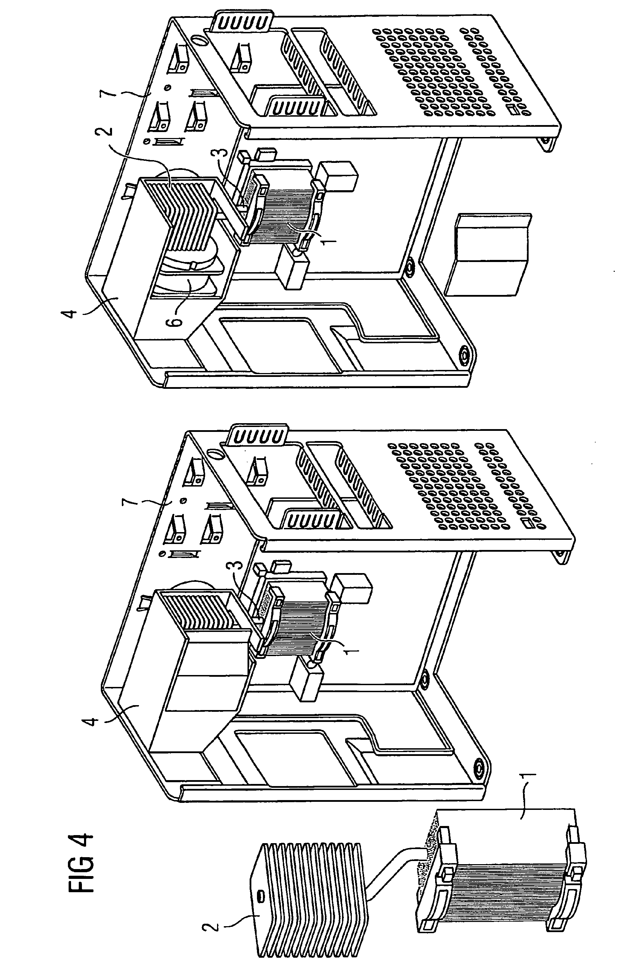

Figur 4 stellt eine alternative, nicht beanspruchte Kühlvorrichtung der in Figur 3 dargestellten Variante dar. So ist der Kühlluftschacht, in dem der zweite Kühlkörper 2 angeordnet ist, mit einer Öffnung in Richtung Gehäuseinneres versehen, so daß über diesen Kühlluftschacht Gehäuse-Innenluft nach außen abtransportiert und damit zusätzlich Wärme von dem Kühlkörper 2 aufnehmen kann. Diese beiden in Figur 3 und 4 dargestellten Kühlvorrichtungen haben ihren Vorteil jeweils darin, daß damit das Kühlsystem im gesamten unterschiedlichen Ansprüchen und Standortbedingungen anpassbar ist. Damit kann auch erreicht werden, daß das Wärmerohr, das oft auch als Heat-Pipe bezeichnet wird, in einem optimierten Arbeitspunkt betrieben wird, oder daß der Gehäuseinnenraum für Geräteeinbauten genutzt werden kann.

## Patentansprüche

1. Vorrichtung zur Kühlung eines hitzeentwickelnden Bauteils im Gehäuse (7) eines Computers,
- wobei ein erster Kühlkörper (1) auf dem hitzeentwickelnden Bauteil angeordnet ist und
- ein zweiter Kühlkörper (2) mit dem ersten Kühlkörper (1) über mindestens ein Wärmerohr (3) verbunden ist, **dadurch gekennzeichnet, daß**
- der zweite Kühlkörper (2) in einem Kühlluftschacht (4) eingebettet ist,
- der innerhalb des Gehäuses (7) an einer Lufteinlaßöffnung und einer Luftauslaßöffnung des Gehäuses (7) angeordnet ist,
- im Kühlluftschacht (4) ein Ventilator (6) vorgesehen ist, durch den die Strömung im Kühlluftschacht (4) angeregt wird, und
- der erste Kühlkörper (1) innerhalb des Gehäuses (7) und außerhalb des Kühlluftschachts (4) angeordnet ist, so dass durch den Kühlluftschacht (4) kühlere Außenluft getrennt von der wärmeren Innenluft strömt und somit der zweite Kühlkörper (2) von kühlerer Außenluft umgeben ist.

2. Vorrichtung nach Patentanspruch 1,
**dadurch gekennzeichnet, daß** das Wärmerohr (3) mit einem Medium gefüllt ist, das am ersten Kühlkörper (1) verdampft und am zweiten Kühlkörper (2) kondensiert.

3. Vorrichtung nach Patentanspruch 1 oder 2,
**dadurch gekennzeichnet, daß** die Strömung der Gehäuse-Innenluft durch einen weiteren Ventilator (5) angeregt wird.

4. Vorrichtung nach einem der vorhergehenden Patentansprüche,
**dadurch gekennzeichnet, daß** das hitzeentwickelnde Computerbauteil eine CPU ist.

5. Vorrichtung nach Patentanspruch 1,
**dadurch gekennzeichnet, daß** der Ventilator (6) in Abhängigkeit der abzuführenden Wärmeenergie regelbar ist.

## Claims

1. Apparatus for cooling a heat-generating component in the housing (7) of a computer,
- wherein a first heat sink (1) is arranged on the heat-generating component, and
- a second heat sink (2) is connected to the first heat sink (1) by means of a heat pipe (3),
**characterized in that**
- the second heat sink (2) is embedded in a cooling-air shaft (4),
- which is arranged within the housing (7) at an air-inlet opening and an air-outlet opening in the housing (7),
- a fan (6) is provided in the cooling-air shaft (4), the flow in the cooling-air shaft (4) being induced by the said fan, and
- the first heat sink (1) is arranged within the housing (7) and outside the cooling-air shaft (4), so that relatively cool external air flows through the cooling-air shaft (4) separately from the relatively warm internal air, and therefore the second heat sink (2) is surrounded by relatively cool external air.

2. Apparatus according to Claim 1,
**characterized in that**
the heat pipe (3) is filled with a medium which evaporates at the first heat sink (1) and condenses at the second heat sink (2).

3. Apparatus according to Claim 1 or 2,
**characterized in that**
the flow of the housing internal air is induced by a further fan (5).

4. Apparatus according to one of the preceding claims,
**characterized in that**
the heat-generating computer component is a CPU.

5. Apparatus according to Claim 1,
**characterized in that**
the fan (6) can be controlled depending on the thermal energy which is to be dissipated.

## Revendications

1. Dispositif pour le refroidissement d'un composant dégageant de la chaleur dans le boîtier (7) d'un ordinateur,
- dans lequel un premier corps de refroidissement (1) est disposé sur le composant dégageant de la chaleur, et
- un deuxième corps de refroidissement (2) est relié au premier corps de refroidissement (1) par au moins un tube d'échange de chaleur (3),
**caractérisé en ce que**
- le deuxième corps de refroidissement (2) est enfoui dans une cuve d'air de refroidissement (4),
- qui est disposée à l'intérieur du boîtier (7) à une ouverture d'entrée d'air et à une ouverture de sortie d'air du boîtier (7),
- dans la cuve d'air de refroidissement (4), il est prévu un ventilateur (6) par lequel l'écoulement est assuré dans la cuve d'air de refroidissement (4), et
- le premier corps de refroidissement (1) est disposé à l'intérieur du boîtier (7) et à l'extérieur de la cuve d'air de refroidissement (4), de telle manière que l'air extérieur plus froid circule à travers la cuve d'air de refroidissement (4) séparément de l'air intérieur plus chaud et que le deuxième corps de refroidissement (22) soit ainsi entouré d'air extérieur plus froid.

2. Dispositif selon la revendication 1, **caractérisé en ce que** le tube d'échange de chaleur (3) est rempli d'un fluide, qui se vaporise sur le premier corps de refroidissement (1) et qui se condense sur le deuxième corps de refroidissement (2).

3. Dispositif selon la revendication 1 ou 2, **caractérisé en ce que** l'écoulement de l'air intérieur du boîtier est provoqué par un autre ventilateur (5).

4. Dispositif selon l'une quelconque des revendications précédentes, **caractérisé en ce que** le composant dégageant de la chaleur de l'ordinateur est une UCT.

5. Dispositif selon la revendication 1, **caractérisé en ce que** le ventilateur (6) est réglable en fonction de l'énergie thermique à évacuer. be dissipated.
